# EUROPÄISCHE PATENTSCHRIFT

(11) **EP 1 192 799 B1**
(45) Veröffentlichungstag und Bekanntmachung des Hinweises auf die Patenterteilung: **03.09.2003**
(21) Anmeldenummer: 00927097.6
(22) Anmeldetag: 28.04.2000
(51) Int. Cl.: H04N 1/41

(54) **VERFAHREN, SYSTEM UND COMPUTERPROGRAMM ZUM KOMPRIMIEREN UND ÜBERTRAGEN VON BILDRASTERDATEN**
METHOD, SYSTEM AND COMPUTER PROGRAM FOR COMPRESSING AND TRANSMITTING IMAGE RASTER DATA
PROCEDE, SYSTEME ET PROGRAMME INFORMATIQUE POUR COMPRIMER ET TRANSMETTRE DES DONNEES DE TRAME

(30) Priorität: 29.04.1999 DE 19919624
(43) Veröffentlichungstag der Anmeldung: 03.04.2002
(73) Patentinhaber: Océ Printing Systems GmbH, 85586 Poing (DE)
(72) Erfinder: WEINER, Helmut, D-81371 München (DE)
(74) Vertreter: Schaumburg, Thoenes & Thurn
(86) Internationale Anmeldenummer: EP0003850
(87) Internationale Veröffentlichungsnummer: WO00067465

(56) Entgegenhaltungen:
- EP-A- 0 683 599
- EP-A- 0 774 858
- DE-A- 3 824 717
- GB-A- 1 527 394
- US-A- 5 018 024
- US-A- 5 465 173

## Beschreibung

Die Erfindung betrifft ein Verfahren zum Komprimieren und Übertragen von Bildrasterdaten, bei dem aus Sprachelementen einer Graphiksprache seitenweise ein Datenstrom von Bildrasterdaten erzeugt wird, der graue Bildbereiche in Form von Ditherzellen enthält, deren Grauwerte durch Muster-Ditherzellen festgelegt sind. Ferner betrifft die Erfindung ein System zum Komprimieren und Übertragen von Bildrasterdaten unter Verwendung des vorgenannten Verfahrens. Außerdem betrifft die Erfindung ein Computerprogramm mit dessen Hilfe ein Computer das Verfahren ausführen kann.

In zunehmendem Maße werden beim Drucken von Text und Zeichnungen nicht nur schwarz/weiß-Strukturen verwendet sondern auch graue Bildbereiche, die einen vorbestimmten Grauwert haben. Wenn beispielsweise ein RIP-Baustein aus Sprachelementen einer Graphiksprache, beispielsweise der bekannten Druckersprache POSTSCRIPT, Seite für Seite einen Datenstrom von Bildrasterdaten erzeugt, ist aufgrund der grauen Bildbereiche, die durch Ditherung erzeugt werden, eine deutlich erhöhte Datenmenge zu verarbeiten. Der RIP-Baustein (RIP = Raster Image Processing) ist im allgemeinen außerhalb des Druckers angeordnet, dies bedeutet, daß seine Bildrasterdaten komprimiert werden müssen, um diese bei einer vorgegebenen Datenübertragungsgeschwindigkeit zeitgerecht übertragen zu können. Ein Beispiel soll dies deutlich machen: Eine DIN A4 Seite enthält bei einer Pixeldichte von 600 dpi (dots per inch) ca. 4,3 Megabyte Bildrasterdaten. Ein Hochleistungsdrucker hat die Fähigkeit, mehr als 400 Seiten DIN A4 je Minute bei 600 dpi zu bedrucken. Demnach wäre ohne Komprimierung eine Datenrate von größer 28 Megabyte/s zu bewältigen.

Bislang werden die Bildrasterdaten mit Hilfe eines standardisierten Komprimierverfahrens, beispielsweise dem FAX G4 Komprimierverfahren, komprimiert und in dieser komprimierten Form zwischengespeichert und/oder an den Drucker direkt übertragen. In der internationalen Patentanmeldung Nr. PCT/DE95/01293, die die Priorität der deutschen Patentanmeldung Nr. 44 34 068.0 in Anspruch nimmt, wird beispielsweise auf Komprimierverfahren im Zusammenhang mit Druckern verwiesen. Durch Bezugnahme ist das genannte Dokument dem Offenbarungsgehalt dieser Anmeldung zuzurechnen. Wenn eine Druckseite keine oder nur wenige Grauraster-Bildbereiche enthält, ist die Komprimierungszeit relativ klein und der Wirkungsgrad der Komprimierung relativ groß. Wenn eine Seite jedoch einen großen Anteil an Grauraster-Bildbereichen enthält, so vergrößert sich die Komprimierungszeit exponentiell und der Komprimierungswirkungsgrad wird klein.

Bildelemente in Form von Graurastern werden häufig unter Anwendung des Dithering-Verfahrens erzeugt. Bei diesem Dithering-Verfahren werden Graustufen durch Verwendung von Punktmustern (Rastern) erzeugt. Beim Dithering-Verfahren macht man sich eine Eigenheit des menschlichen Auges zunutze: ab einem bestimmten Betrachterabstand und einer bestimmten Punktdichte werden einzelne Bildpunkte nicht mehr wahrgenommen, sondern sie verwischen zu einem Grauwert. Eine Ditherzelle enthält demnach eine Vielzahl von Bildpunkten; je nach gewünschtem Grauwert sind nur ein Bildpunkt, mehrere Bildpunkte oder sämtliche Bildpunkte einer Ditherzelle eingefärbt. Um ein gutes Verschmelzen der Bildpunkte zu erreichen, werden die eingefärbten Bildpunkte nach einem vorbestimmten Algorithmus gestreut. Die Grauwerte selbst sind durch vorgegebene Muster-Ditherzellen festgelegt. Wenn eine Ditherzelle 8x8 Bildpunkte in Form einer Matrix enthält und eine symmetrische Anordnung der eingefärbten Bildpunkte vorgegeben ist, so sind 32 oder 64 Grauwerte realisierbar. Da Ditherzellen und die Verteilung der eingefärbten Bildpunkte relativ komplex sind, versagen häufig Standard-Kompressionsverfahren zur Reduktion des Datenvolumens.

In "Das Druckerbuch" der Océ Printing Systems GmbH, Ausgabe 3d, Okt. 1998, ISBN 3-00-001019-X, werden im Abschnitt 6 Raster-Techniken beschrieben, wobei auch auf die Dithertechnik bezug genommen wird. Als Dithertechnik wird u.a. die Dot-Pattern-Methode beschrieben.

Die Dithering-Methode ist ferner beschrieben in "Das große Data Becker Computer Lexikon", Auflage 1997, ISBN 3-8158-1575-4 und in "Computer Lexikon", Verlag C.H. Beck, München, ISBN 3-406-39696-8.
Die US-A 5,073,953 beschreibt ein Verfahren zum automatischen Segmentieren von Dokumenten. Die Bildelemente des Dokumentes werden nach unterschiedlichen Typen analysiert, z.B. schwarz/weiß Texte, Grafikelemente, kontinuierliche Tonungsbilder, Halbtonbilder etc. Das zu analysierende Dokument wird in Subbilder unterteilt und diesen Subbildern der Typus zugeordnet.

Aus der DE-C2-38 24 717 und aus der Veröffentlichung von W. Crocca et. al., "Compression of grey digital images using grey separations", Xerox Disclosure Journal, Vol. 15 No. 6, Nov/Dec 1990, pages 481-482, sind Bildkompressionseinrichtung bekannt. Aus der DE-C2-41 27 920 ist eine Bildverarbeitungseinrichtung bekannt, bei der Bilddaten in Blöcke unterteilt werden und die Blöcke sequentiell abgearbeitet werden. Aus der DE-C2-29 53 109 und aus der DE-A1-42 15 157 sind Bildempfangsgeräte bekannt. Aus der JP-A-11-65793 ist ein Verfahren beschrieben mit dem Daten je nach Objekttyp (Bild oder Text) verschieden komprimiert werden.

Aus der EP 0 774 858 A3 ist ein Verfahren zum Komprimieren und Übertragen. von Bildrasterdaten bekannt, bei dem Bildelemente (Pixels) zu Makrozellen nach Art von Kacheln zusammengefaßt werden. Diese Makrozellen werden vorgegebenen Typenklassen zugeordnet, z.B. dem Typus Text, Grafik, Grautonbild etc. Abhängig von der Information über den Typ der Makrozelle wird die anzuwendende Kompressionsmethode angepaßt. Zur Komprimierung werden die Pixel der jeweiliges Kachel neu geordnet (rescanning), wobei der jeweilige Belichtungswert des Pixels abhängig von der Position des Pixels in bezug auf das Zentrum der Makrozelle festgelegt wird.

Die US-A 5,465,173 betrifft ein Bildverarbeitungsverfahren, bei dem Halbton-Bilddaten gespeichert werden. Die Speicherung erfolgt blockweise mit einer vorgegebenen Anzahl von Pixel-Daten. Auf der Basis der blockweisen Daten erfolgt eine Kompression der Halbton-Bilddaten, wobei der Speicherbedarf reduziert wird.

Es ist Aufgabe der Erfindung, ein Verfahren und ein System zum Komprimieren und Übertragen von Bildrasterdaten anzugeben, das auch dann mit hoher Effizienz arbeitet, wenn eine zu übertragende Seite graue Bildelemente enthält.

Diese Aufgabe wird für ein Verfahren mit den Merkmalen des Anspruchs 1 gelöst. Vorteilhafte Weiterbildungen sind in den Unteransprüchen angegeben.

Gemäß der Erfindung werden die Bildrasterdaten einer jeden Seite in Kacheln, beispielsweise gleich große Kacheln, eines zweidimensionalen Gitternetzes eingeteilt. Für jede Kachel wird ermittelt, ob sie ausschließlich Ditherzellen enthält oder nicht. Wenn ersteres zutrifft, wird die zugehörige Muster-Ditherzelle und deren Grauwert bestimmt und diese Kachel markiert. Wenn die Kachel nicht ausschließlich Ditherzellen enthält, beispielsweise nicht eingefärbte weiße Anteile, so wird diese Kachel nicht weiter analysiert. Die Bildrasterdaten einer solchen Kachel werden nach dem herkömmlichen Kompressionsverfahren komprimiert. Von den markierten Kacheln werden Kenndaten, beispielsweise über die Größe und den Grauwert, festgelegt und diese Kenndaten als komprimierte Daten übertragen. Die Bildrasterdaten solcher markierten Kacheln müssen nicht nach dem herkömmlichen Komprimierverfahren komprimiert werden, d.h. sie werden beim herkömmlichen Komprimierverfahren ausgeklammert. Auf diese Weise kann das herkömmliche Komprimierverfahren eine Seite schneller und mit höherer Effizienz komprimieren, da einerseits das Komprimieren markierter Kacheln und andererseits der erhebliche Komprimieraufwand für Ditherzellen entfällt. Gemäß dem erfinderischen Verfahren ist zwar insgesamt ein Zusatzaufwand für die Analyse der Kacheln und die Übertragung der Kenndaten markierter Kacheln erforderlich. Dieser Zusatzaufwand ist aber gering im Vergleich zur Einsparung an Kompressionsaufwand für das standardisierte Kompressionsverfahren.

Gemäß einem weiteren Aspekt der Erfindung wird ein System zum Komprimieren und Übertragen von Bildrasterdaten mit den Merkmalen des Anspruchs 27 angegeben. Dieses System hat die weiter oben in Zusammenhang mit dem Verfahren bereits beschriebenen technischen Vorteile.

Weiterhin wird ein Verfahren zum Komprimieren und Übertragen von Bildrasterdaten mit den Merkmalen des Anspruchs 31 angegeben. Bei diesem Verfahren wird mindestens ein Bereich ermittelt, der nur Ditherzellen enthält, die mit einer vorbestimmten Muster-Ditherzelle und einem Grauwert übereinstimmt. Die Kenndaten dieses Bereichs werden zur weiteren Verarbeitung der Bildrasterdaten übertragen.

Gemäß einem weiteren Aspekt der Erfindung wird ein Computerprogrammprodukt, ein Computerprogrammelement und ein computerlesbares Medium nach den Ansprüchen 35, 36 bzw. 38 angegeben. Das Computerprogrammprodukt und das Computerprogrammelement enthalten Befehle und Daten zum Steuern eines Computers. Nach dem Laden des Computerprogrammproduktes bzw. des Computerprogrammelements, welches beispielsweise als Softwaremodul einzeln oder zusammen mit anderen Softwaremodulen geladen wird, werden beim Abarbeiten der Befehle die in den Ansprüchen definierten Verfahrensschritte ausgeführt und das technische Ergebnis erreicht. Als computerlesbares Medium kann eine Diskette, eine magnetische oder optische Speicherplatte (CD ROM), ein Datenträgerband oder ein entfernter Speicher verwendet werden, von dem durch Datenfernübertragung, beispielsweise über das Internet, ein Computerprogramm übertragen und geladen wird.
Ein Ausführungsbeispiel der Erfindung wird im folgenden anhand der Zeichnungen erläutert. Darin zeigt:
Fig. 1 Muster-Ditherzellen mit Überdeckung der eingefärbten Bildpunkte,
Fig. 2 die Einteilung einer Seite nach Kacheln mit Hilfe eines Gitternetzes,
Fig. 3 einen Suchalgorithmus unter Verwendung von aus Kacheln bestehenden Vergleichszeilen,
Fig.4, 5 und 6 einen Suchalgorithmus zum Festlegen des Grauwertes einer Kachel,
Fig. 7 das Zusammenfassen von Kacheln zu Rechtecken,
Fig. 8 das Löschen eines Rechtecks,
Fig. 9 eine Erweiterungsmöglichkeit für ein Rechteck
Fig. 10 die Festlegung der Bitlänge einer Vergleichszeile,
Fig. 11 die Übertragung der Bildrasterdaten unter Verwendung des erfindungsgemäßen Verfahrens,
Fig. 12 eine Darstellung des erfindungsgemäßen Verfahrens in einem Blockdiagramm, und
Fig. 13 ein herkömmliches Verfahren zum Komprimieren und Übertragen von Bildrasterdaten nach dem Stand der Technik, und
Fig. 14 ein Flußdiagramm mit Verfahrensschritten zum Zuweisen von Grauwerten zu Kacheln.

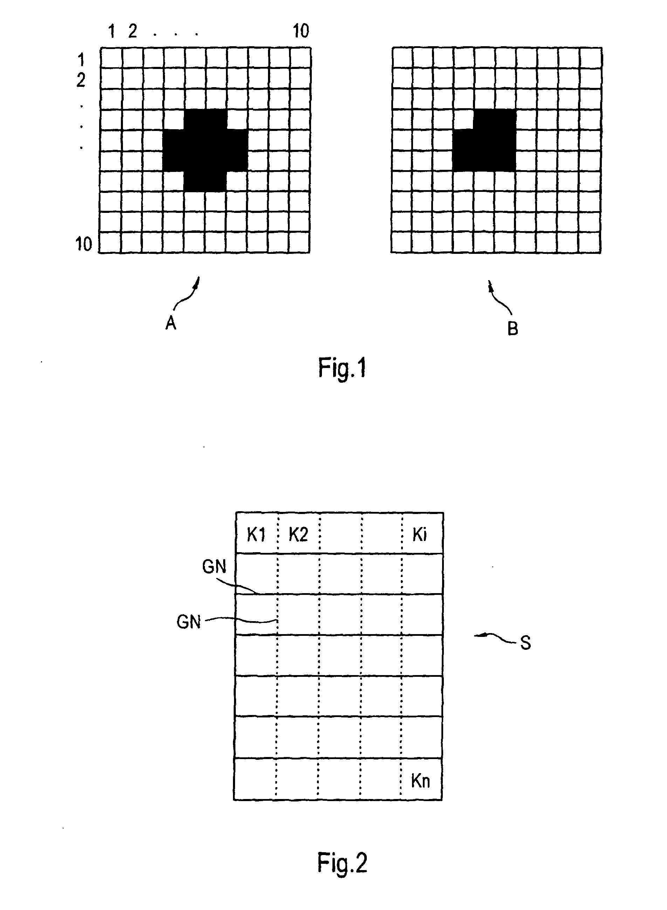

Figur 1 zeigt den Aufbau zweier Muster-Ditherzellen A und B. Beide Muster-Ditherzellen A, B haben 10 mal 10 Bildpunkte, d.h. die Zeilenlänge beträgt 10 Bildpunkte und die Spaltenlänge ebenfalls 10 Bildpunkte. Die Muster-Ditherzelle A enthält schwarz eingefärbte Bildpunkte in der Mitte nach Art eines Kreuzes. Die Muster-Ditherzelle B enthält in der Mitte schwarz eingefärbte Bildpunkte, die zusammen ein nach links weisendes L ergeben. Die Muster-Ditherzelle B enthält weniger schwarz eingefärbte Bildpunkte als die Muster-Ditherzelle A. Demgemäß ist das Grau der Muster-Ditherzelle B heller als das Grau der Muster-Ditherzelle A. Dies bedeutet, daß der Grauwert der Muster-Ditherzelle B niedriger ist als der Grauwert der Muster-Ditherzelle A. Generell gilt für die Anordnung der schwarz eingefärbten Bildpunkte von Muster-Ditherzellen, daß die Muster-Ditherzelle mit höherem Grauwert eingefärbte Bildpunkte mindestens an gleichen Positionen enthält, wie die Muster-Ditherzelle mit nächst niedrigem Grauwert. Dies bedeutet; daß eingefärbte Bildpunkte von Muster-Ditherzellen mit höherem Grauwert die eingefärbten Bildpunkte von Muster-Ditherzellen mit niedrigerem Grauwert überdecken. In der Figur 1 hat die dunklere Muster-Ditherzelle A schwarz eingefärbte Bildpunkte an gleichen Positionen wie die Muster-Ditherzelle B. Zusätzlich sind bei der Muster-Ditherzelle A weitere Bildpunkte schwarz eingefärbt.

Theoretisch kann mit Hilfe einer Vielzahl von Muster-Ditherzellen nach Art der in Figur 1 dargestellten Muster-Ditherzellen A, B eine Vielzahl von Grauwerten realisiert werden, wobei der niedrigste Grauwert durch einen einzigen schwarz eingefärbten Bildpunkt definiert ist und der höchste Grauwert dann vorliegt, wenn sämtliche Bildpunkte der Ditherzelle schwarz eingefärbt sind. In der Praxis wird eine geringere Anzahl von Grauwerten als die theoretisch mögliche Anzahl und eine entsprechend verringerte Anzahl von Muster-Ditherzellen verwendet, beispielsweise 16 oder 32. Bei diesem Beispiel hat dann der Grauwert einen Wertebereich von 1 bis 16 bzw. 1 bis 32. Ein extremer Grauwert 0 bedeutet, daß keiner der Bildpunkte schwarz eingefärbt ist; insoweit liegt keine Ditherzelle, sondern eine weiße, unbedruckte Fläche vor. Es sei noch darauf hingewiesen, daß in der Praxis zwei Typen von Ditherzellen vorherrschen, die entweder 10 mal 10 Bildpunkte oder 8 mal 8 Bildpunkte in einer Matrixanordnung haben.

Figur 2 zeigt schematisch die Einteilung einer Seite S in gleich große Kacheln K1, K2, Ki bis Kn eines zweidimensionalen Gitternetzes GN. Jede Kachel K enthält eine Vielzahl von Bildrasterdaten in gleich langen Datenzeilen. Innerhalb einer Kachelzeile K1 bis Ki werden die Kacheln beim anschließend noch zu beschreibenden Suchalgorithmus von links nach rechts abgearbeitet; die Kachelzeilen werden von oben nach unten abgearbeitet. Denkbar ist jedoch auch eine andere Abarbeitungsfolge.

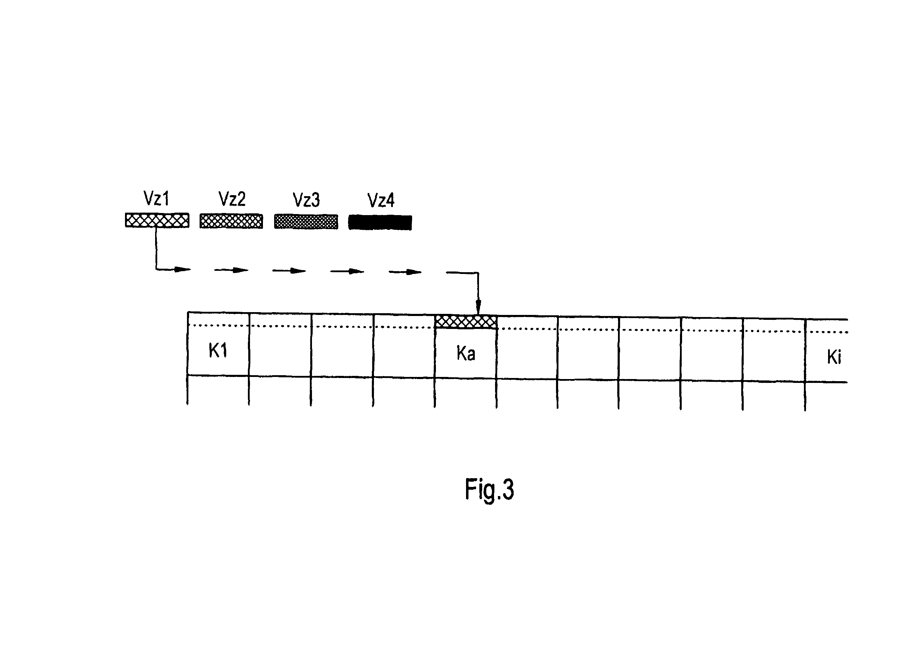

Figur 3 zeigt schematisch die Vorgehensweise zum Ermitteln von Ditherzellen, die in einer Kachel Ka enthalten sind. Zunächst werden Vergleichszeilen Vz1, Vz2, Vz3, Vz4 bereitgestellt, welche mindestens dieselbe Zeilenlänge wie die Kacheln K1 bis Kn haben. Zur besseren Übersicht werden nur vier Vergleichszeilen Vz1 bis Vz4 verwendet. In der Praxis werden so viele Vergleichszeilen bereitgestellt wie Grauwerte durch Muster-Ditherzellen definiert sind. Jede Vergleichszeile Vz1 bis Vz4 enthält gleiche Muster-Ditherzellen mit einem bestimmten Grauwert. Die Vergleichszeile Vz1 enthält Muster-Ditherzellen mit Grauwert G=1, die Vergleichszeile Vz2 Muster-Ditherzellen mit Grauwert G=2, die Vergleichszeile Vz3 Muster-Ditherzellen mit Grauwert G=3 und die Vergleichszeile Vz4 Muster-Ditherzellen mit Grauwert G=4. Vergleichszeile Vz1 enthält also die wenigsten schwarz gefärbten Bildpunkte. Die Vergleichszeile Vz2 mit nächst höherem Grauwert G=2 enthält an gleichen Rasterpositionen schwarz eingefärbte Bildpunkte der Muster-Ditherzelle mit Grauwert G=1 und zusätzliche schwarz eingefärbte Bildpunkte. Die Muster-Ditherzellen der Vergleichszeile Vz3 mit nächst höherem Grauwert G=3 enthält an gleichen Positionen die schwarz eingefärbten Bildpunkte der Muster-Ditherzellen der Vergleichszeilen Vz1 und Vz2 sowie zusätzliche schwarz eingefärbte Bildpunkte. Ähnliches gilt für die Muster-Ditherzellen der Vergleichszeile Vz4.

Aufgrund der Überdeckung der eingefärbten Bildpunkte der Muster-Ditherzellen der Vergleichszeile Vz1 bis Vz4 reicht es zum Auffinden von Ditherzellen in den verschiedenen Kacheln K aus, wenn im ersten Suchschritt lediglich eine Übereinstimmung der ersten Zeile einer jeden Kachel K mit der Vergleichszeile Vz1 festgestellt wird, wie dies in der Figur 3 anhand der Kachel Ka schematisch dargestellt ist. Kacheln, wie beispielsweise die Kachel K1, die bereits in der ersten Zeile nicht mit der Vergleichszeile Vz1 übereinstimmen, werden beim weiteren Verfahren nicht mehr betücksichtigt. Solche Kacheln erhalten den extremen Grauwert G=0 zugewiesen, d.h. sie enthalten in der ersten Zeile nicht durchgängig Ditherzellen, die mit der Muster-Ditherzelle mit Grauwert G=1 übereinstimmen. Die Suche nach Kacheln innerhalb einer Seite, die Ditherzellen mit mindestens dem Grauwert G=1 haben, erfolgt also sehr schnell, wenn die Kachelgröße entsprechend groß gewählt wird. Bereits hier ist zu erkennen, daß das Verfahren nach der Erfindung aufgrund der Einteilung nach Kacheln schnell arbeitet.

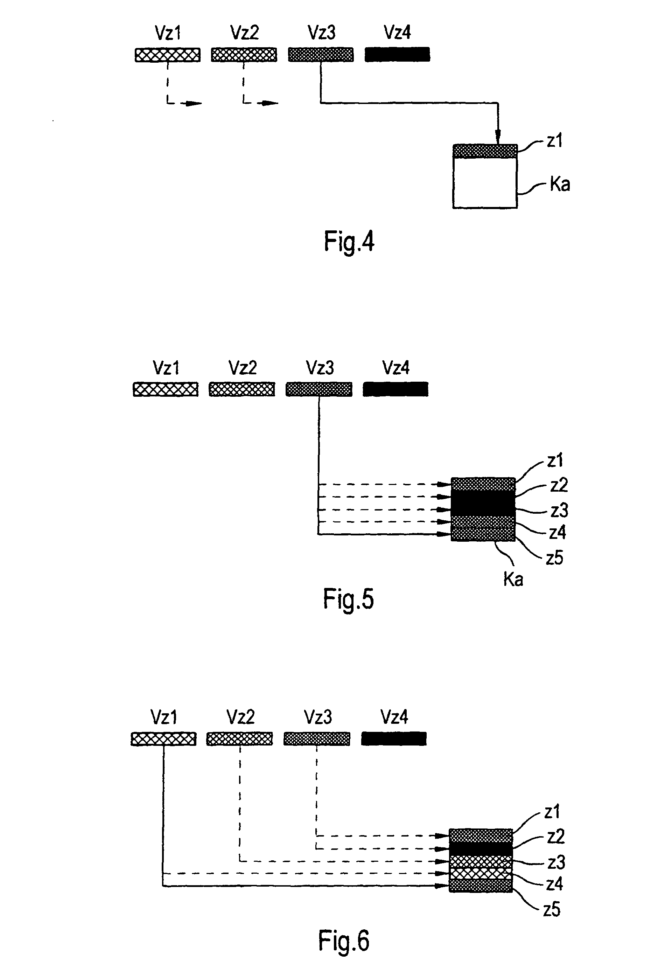

Figur 4 zeigt schematisch den nächsten Schritt, bei dem innerhalb der Kachel Ka durch Vergleich mit den Vergleichszeilen Vz1 bis Vz4 festgestellt wird, welchen tatsächlichen Grauwert G die erste Zeile z1 dieser Kachel Ka hat. Im vorliegenden Fall wird festgestellt, daß eine Übereinstimmung zwischen Vergleichszeile Vz3 und der ersten Zeile z1 der Kachel Ka besteht, d.h. der Grauwert ist G=3.

Figur 5 zeigt schematisch den nächsten Schritt, bei dem innerhalb der Kachel Ka festgestellt wird, ob zumindest alle Zeilen z1 bis z5 mit Ditherzellen den Grauwert G=3 enthalten, der im vorhergehenden Schritt (Figur 4) festgestellt worden ist. Im vorliegenden Fall enthalten sämtliche Zeilen z1 bis z5 der Kachel Ka mindestens den Grauwert G=3 entsprechend der Vergleichszeile Vz3. Zwei Zeilen z2 und z3 haben einen höheren Grauwert G>3, sind also dunkler. Dies ist zulässig, da Muster-Ditherzellen mit höherem Grauwert dieselben Bildpunkte schwarz eingefärbt haben, wie Muster-Ditherzellen mit niedrigerem Grauwert. Wenn der Grauwert G jedoch niedriger ist, als in der ersten Zeile z1 festgestellt, so wird zum nächsten Schritt verzweigt, der schematisch in Figur 6 dargestellt ist.

In Figur 6 ist gezeigt, daß die Zeile z3 mit der Vergleichszeile Vz1 übereinstimmt, d.h. den niedrigsten Grauwert G=1 hat. In diesem Falle wird der gesamten Kachel Ka der Grauwert G=1 zugewiesen, da dieser Grauwert G mindestens auch in sämtlichen anderen Zeilen z1 bis z5 der Kachel Ka enthalten ist. Würde jedoch in einer Zeile ein Grauwert festgestellt, der nicht mit einer Muster-Ditherzelle übereinstimmt, beispielsweise der extreme Grauwert G=0, was bedeutet, daß keine Vergleichszeile paßt, so wird dieser Kachel der Wert G=0 zugeordnet, und sie wird im weiteren Verfahren nicht mehr berücksichtigt.

Es ist darauf hinzuweisen, daß die Vergleichszeilen Vz1 bis Vz4, die Ditherzellen in Zeilenform angeordnet haben, wiederum Bildpunktzeilen enthalten. In der Praxis wird der Vergleich der Vergleichszeilen Vz1 bis Vz4 mit Ditherzeilen der Kachel Ka auf der Basis solcher Bildpunktzeilen durchgeführt. Anstelle von Vergleichszeilen Vz1 bis Vz4 können auch Vergleichskacheln verwendet werden, deren Größe den Kacheln Ka entspricht und die mehrere Zeilen von Ditherzellen enthalten.

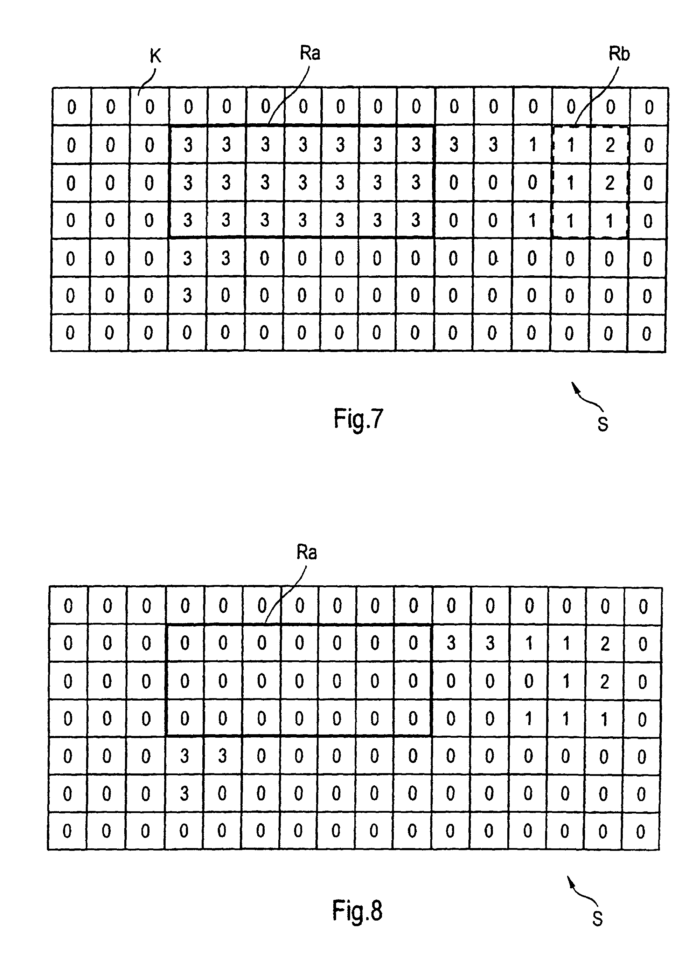

Figur 7 zeigt schematisch einen Teil einer Seite mit Kacheln K, denen Grauwerte G=0, 1, 2 oder 3 zugewiesen worden sind. Diese Zuweisung von Grauwerten entspricht einer Markierung. Der Wert G=0 bedeutet, daß kein Standard-Grauwert für diese Kachel ermittelt werden konnte, beispielsweise weil eine solche Kachel nicht durchgängig Ditherzellen mit dem niedrigsten Grauwert (Grauwert G=1) enthält.

Die in Figur 7 dargestellten Kacheln werden Kachelzeile für Kachelzeile von links nach rechts durchsucht. Kacheln mit dem Wert G=0 werden nicht berücksichtigt. Nebeneinander liegende Kacheln mit gleichem Wert, in diesem Fall dem Grauwert G=3, werden zu einem Rechteck Ra zusammengefaßt. Auf diese Weise werden größere Flächen der Seite S mit gleich grauen Bildelementen zusammengefaßt.

Eine weitere Variante bei der Suche nach Rechtecken sieht vor, daß Kacheln zu Rechtecken zusammengefaßt werden, die den gleichen Grauwert (beispielsweise Grauwert G=1) oder einen höheren Grauwert (beispielsweise Grauwert G=2 oder G=3) enthalten. Das Rechteck Rb zeigt die Zusammenfassung von 6 Kacheln, die die Grauwerte G=1 oder G=2 enthalten. Eine solche Zusammenfassung ist zweckmäßig, da Ditherzellen mit Grauwert G=2 an gleichen Positionen wie Ditherzellen mit Grauwert G=1 schwarz eingefärbte Bildpunkte haben, wie weiter oben bereits erläutert. Dem Rechteck Rb wird insgesamt der Grauwert G=1 zugeordnet, d.h. der niedrigste Grauwert G innerhalb des Rechtecks Rb. Es verbleibt somit für die Kacheln mit Grauwert G=2 ein Überschuß an schwarz eingefärbten Bildpunkten. Dieser Überschuß ergibt sich, wenn in einem Subtraktionsschritt von sämtlichen Ditherzellen des Rechtecks Rb Ditherzellen mit Grauwert G=1 subtrahiert werden. Diese überschüssigen Bildpunkte werden als Bildrasterdaten nach dem herkömmlichen Standard-Komprimierungsverfahren komprimiert und übertragen.

Figur 8 zeigt die weitere Behandlung des Rechtecks Ra innerhalb der Bildrasterdaten einer Seite S. Als Kenndaten für das Rechteck Ra wird die Position der linken oberen Ecke des Rechtecks Ra ermittelt. Weiterhin wird die Höhe und Breite sowie der Grauwert G, in diesem Fall der Grauwert G=3, festgestellt. Diese Kenndaten werden in eine Liste von Rechtecken eingetragen, in der weitere Rechtecke nach Art des Rechtecks Ra aufgeführt werden. Anschließend wird das Rechteck Ra innerhalb der Seite S bereinigt, d.h. es wird den Kacheln des Rechtecks Ra der Wert G=0 zugewiesen, so daß bei der Suche nach weiteren Rechtecken diese Kacheln nicht mehr berücksichtigt werden. Wenn die gesamte Seite S nach zu Rechtecken zusammenfaßbaren Kacheln durchsucht worden ist und die Kenndaten der Rechtecke in die Liste eingetragen sind, so ist die Analyse der Seite S beendet.

In einem nächsten Schritt kann die Liste von Rechtecken sortiert werden. Rechtecke mit absteigender Anzahl von Kacheln erhalten in der Liste einen absteigenden Rang. Von dieser Liste werden dann nur diejenigen Rechtecke ausgewählt und deren Kenndaten gesondert übertragen, deren Anzahl von Kacheln einen vorbestimmten Wert übersteigt. Auf diese Weise werden nur graue Bildelemente gesondert übertragen, die in großflächigen Rechtecken enthalten sind. Dadurch wird die Effizienz des Komprimierungsverfahrens weiter gesteigert. Eine Entscheidung, ein Rechteck zu verwerfen, kann in diesem Fall bereits während des Rechteck-Bildungs-Vorgangs getroffen werden und somit die verworfenen Kacheln bei der Bildung von anderen Rechtecken zur Verfügung gestellt werden. Dadurch wird die Effizienz des Komprimierverfahrens weiter gesteigert.
Eine andere Variante kann darin bestehen, daß die Anzahl der Rechtecke der Liste auf einen vorgegebenen Wert beschränkt ist. Da die Übertragung der Kenndaten von Rechtekken einen zusätzlichen Komprimierungsaufwand bedeutet und dieser Aufwand bei einer großen Zahl von Rechtecken ansteigt, ist es zweckmäßig, diese Anzahl zu beschränken.

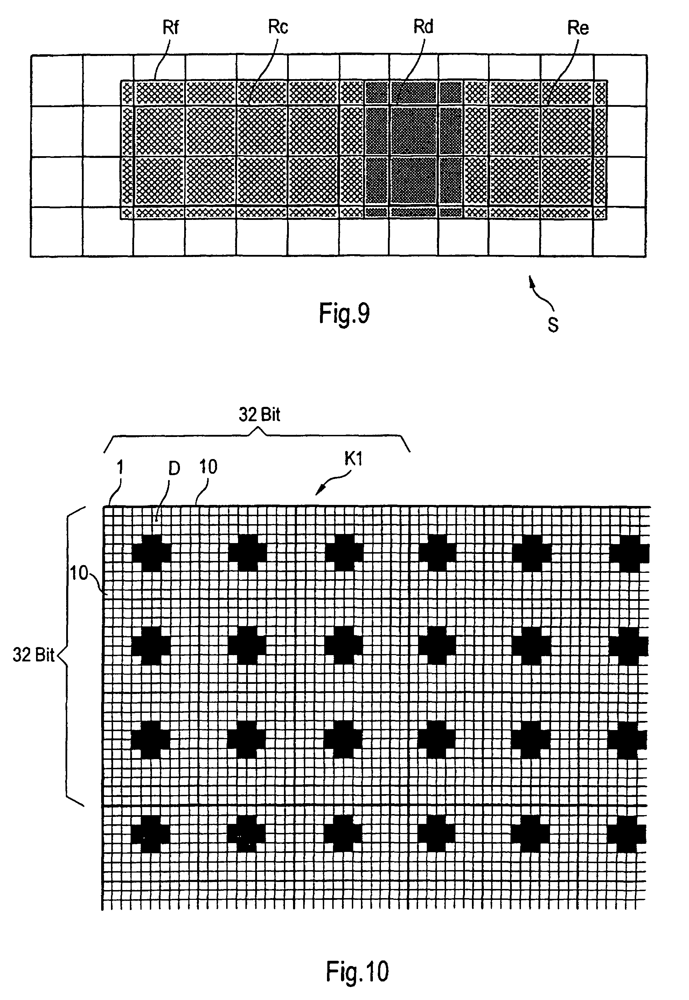

Figur 9 zeigt eine weitere Variante der Bildung von Rechtecken, deren Grenzen nicht mit Kachelgrenzen übereinstimmen müssen. Wenn, wie in Figur 7 gezeigt ist, Kacheln zu Rechtecken zusammengefaßt worden sind, so stimmen die Grenzen dieser Rechtecke mit Kachelgrenzen überein. Wenn nun Ditherzellen mit gleichem Grauwert wie die innerhalb eines Rechtecks zeilenweise oder spaltenweise an ein solches Rechteck angrenzen und den gleichen minimalen Grauwert G wie die Ditherzellen des Rechtecks haben, so können diese Ditherzellen mit in das Rechteck einbezogen werden. Die Höhe und Breite des jeweiligen Rechtecks muß dann entsprechend vergrößert werden. Die Grenzen der Rechtecke sind dann soweit vergrößert, wie das gleichartige Grauraster als Rechteck tatsächlich im Original einer Seite S auftritt. Auf diese Weise wird die Effizienz des erfindungsgemäßen Komprimierungsverfahrens weiter gesteigert.

In Figur 9 sind mit dick ausgezogenen Linien drei Rechtecke Rc, Rd, Re gezeigt. Die Rechtecke Rc und Re haben einen Grauwert G=2. Das Rechteck Rd hat einen Grauwert G=4. An die Rechtecke Rc, Rd, Re grenzen Ditherzellen an, deren Grauwerte G mit denen der jeweiligen Rechtecke übereinstimmen. Entsprechend können die einzelnen Rechtecke Rc, Rd, Re in ihrer jeweiligen Höhe und Länge vergrößert werden. Darüber hinaus ist es möglich, sämtliche vergrößerten Rechtecke zu einem einzigen Rechteck Rf zusammenzufassen. Dieses Rechteck Rf hat dann den minimalen Grauwert aller vergrößerten Rechtecke Rc, Rd, Re, nämlich den Grauwert G=2. In Figur 9 ist Rd ein Subrechteck mit G=4 innerhalb des Gesamtrechtecks Rf mit G=2. Der gesamte Grauwert ist G=2, der als Kenndatum für das Rechteck Rf übertragen wird. Es ist auch möglich, eine inverse Darstellung zu verwenden, für die für das Rechteck Rf der Grauwert G=4 als Kenndatum übertragen wird. Beim weiteren Verarbeiten der Bilddaten ist dann der verringerte Grauwert G=2 für die weiteren Rechtecke Rc und Re zu berücksichtigen.

Figur 10 zeigt eine andere Variante, bei dem die Größe der Ditherzellen und die Zeilenlänge sowie die Spaltenlänge einer Kachel berücksichtigt werden. Üblicherweise haben Ditherzellen eine 8x8 oder eine 10x10 Bildpunktmatrix. Als Zeilenlänge für eine Kachel eignet sich bevorzugt die Bitbreite der Register der verwendeten Computerhardware, mit dem das erfindungsgemäße Verfahren realisiert wird. Gebräuchlich sind Zeilenlängen von 8, 16, 32, 64 oder 128 Bit. Eine additive Kombination von diesen genannten Zeilenlängen ist ebenfalls möglich, beispielsweise eine Gesamtzeilenlänge aus der Kombination von 8 Bit + 32 Bit = 40 Bit etc.. Da die Zeilenlänge der Ditherzellen nicht mit der Zeilenlänge der Kacheln übereinstimmen muß, ist es zweckmäßig, daß die bereits erwähnten Vergleichszeilen Vz1 bis Vz4 eine Länge entsprechend dem kleinsten gemeinsamen Vielfachen der Zeilenlänge der Kachel und der Zeilenlänge der Ditherzellen D hat. Im Beispiel nach Figur 10 haben die Ditherzellen D eine Zeilen- und Spaltenlänge von 10. Die Kacheln, z. B. die Kachel K1, hat eine Zeilen- und Spaltenlänge von 32 Bit, d.h. die Kachel K1 umfaßt der Länge und Breite nach 3 Ditherzellen sowie 2 Spalten bzw. Zeilen der nächsten angrenzenden Ditherzellen. Das kleinste gemeinsame Vielfache aus Zeilenlänge der Kachel K1 und Zeilenlänge der Ditherzelle D beträgt 160 Bit. Es ist daher zweckmäßig die Vergleichszeilen Vz1 bis Vz4 mit einer Zeilenlänge von 160 Bit auszustatten. In diesem Fall kann bei einer Registerbreite von 32 Bit mit Hilfe von 5 Doppelwortoperationen ein Vergleich innerhalb einer Kachelzeile von 5 Kacheln, d.h. von 16 Ditherzellen, gleichzeitig durchgeführt werden. Derartige Doppelwortoperationen können mit Hilfe von Registern sehr schnell ausgeführt werden.

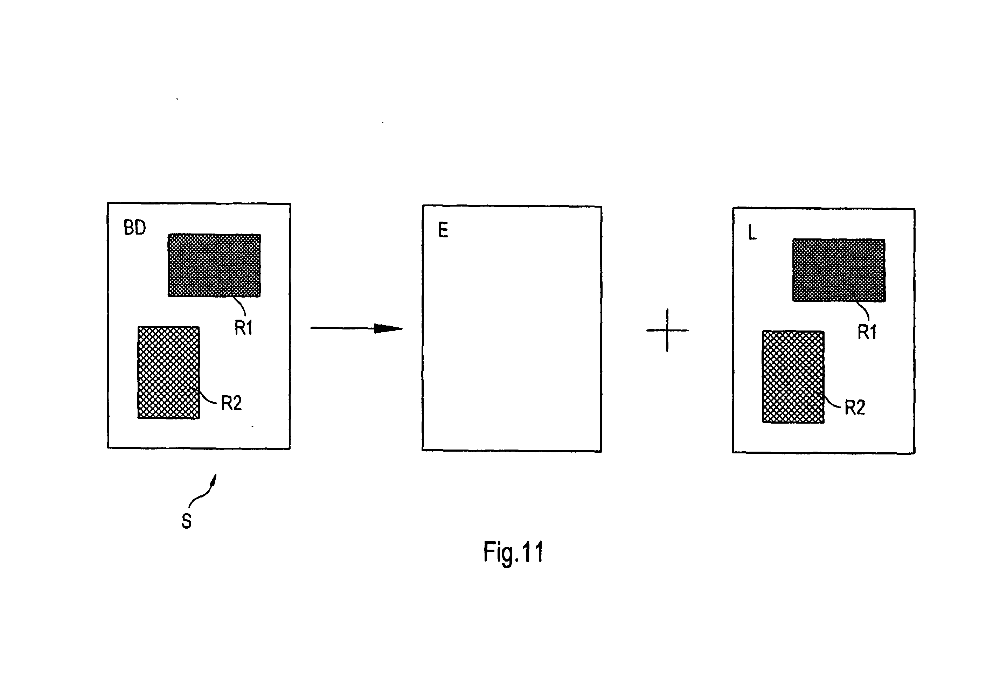

Figur 11 zeigt das zum Komprimieren und Übertragen der Bildrasterdaten einer Seite verwendete Prinzip der Erfindung. Die vom RIP-Baustein erzeugten Bildrasterdaten PD einer Seite S werden gemäß dem vorgenannten Verfahrensschritten analysiert und dabei Rechtecke R1, R2 mit gleichen Ditherzellen ermittelt. Auf der Seite S werden diese beiden Rechtecke R1, R2 beispielsweise durch ein Subtraktionsverfahren aus den gesamten Bildrasterdaten BD ausgeblendet. Die verbleibenden Bildrasterdaten E werden nach einem herkömmlichen Standard-Komprimierungsverfahren, beispielsweise nach dem FAX G4 Komprimierungsverfahren, übertragen. Es sind jedoch auch andere Komprimierungsverfahren denkbar, beispielsweise solche, die nach dem Lauflängencodierungsverfahren arbeiten. Die Kenndaten der Rechtecke R1, R2 werden separat übertragen, wobei man sich vorzugsweise einer Liste L von Rechtecken bedient und lediglich diese Listendaten übertragen werden. Auf der Empfängerseite werden dann die Daten, die nach dem Standard-Komprimierungsverfahren übertragen worden sind sowie die Bildrasterdaten BD der Rechtecke R1, R2 wieder zusammengesetzt. Auf diese Weise müssen nicht sämtliche Bildrasterdaten BD der Seite S nach dem Standard-Komprimierungsverfahren komprimiert und übertragen werden, sondern nur die Daten E, d.h. mit Ausnahme der Rechtecke R1, R2. Es ist darauf hinzuweisen, daß nicht alle grauen Bildelemente mit gleichen Ditherzellen zu Rechtecken zusammengefaßt werden müssen. Für eine verbesserte Reduzierung des zu übertragenden Datenstroms und der Bearbeitungszeit bei der Komprimierung ist es ausreichend, wenn etwa 80 bis 90% aller gleichen Ditherzellen erfaßt werden.

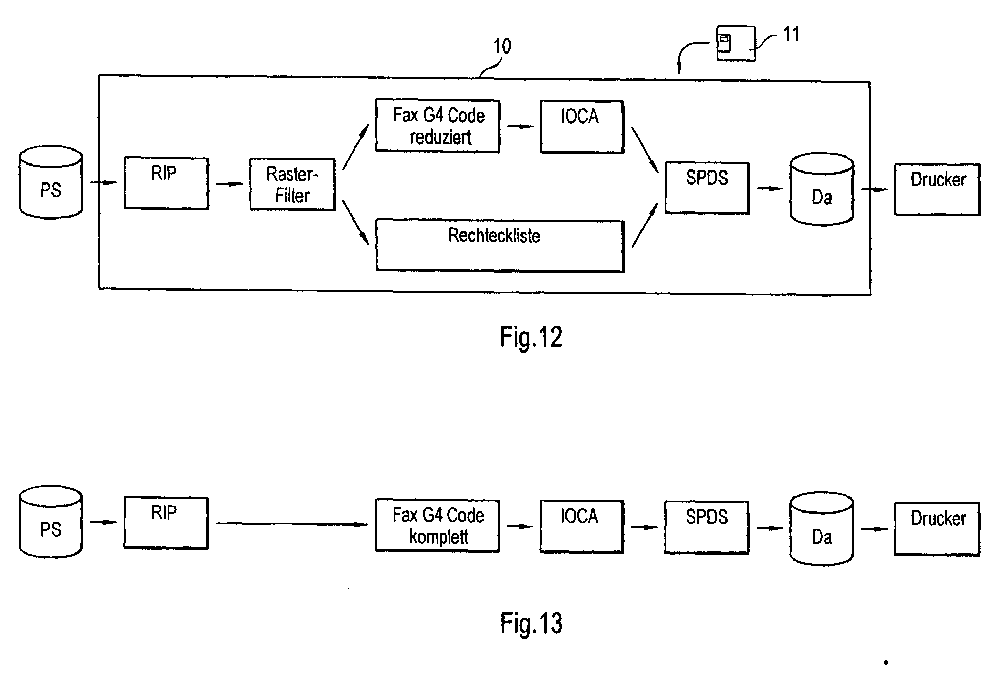

Figur 12 zeigt in einem Blockdiagramm eine schematische Darstellung des erfindungsgemäßen Verfahrens bzw. des erfindungsgemäßen Systems. In einem Computer 10 erzeugt ein RIP-Baustein RIP aus Sprachelementen der Druckersprache POSTSCRIPT PS Bildrasterdaten, die im Computer 10 mit einem entsprechenden Computerprogramm nach den weiter oben beschriebenen Analyseschritten, die einer Filterfunktion in einem Rasterfilter entsprechen, untersucht werden. Das Computerprogramm kann durch eine Diskette 11 in den Computer 10 auf einen Permanentspeicher (Festplatte) oder in einen flüchtigen Arbeitsspeicher (RAM) geladen werden. Die je Druckseite nach Abzug der ermittelten Rechtecke noch verbleibenden Bildrasterdaten werden im Computer 10 nach dem FAX G4-Komprimierungsverfahren komprimiert und nach den Datenformaten IOCA und/oder SPDS verpackt. Das Datenformat IOCA ist im IOCA-Reference-Manual "Image Object Content Architecture" Reference, Fourth Edition (August 1993) SC31-6805-03, International Business Machines Corporation, beschrieben. Das Datenformat SPDS ist im SPDS-Reference-Manual "SPDS" Edition 11.94, U 9737-J-Z247-3, Océ Printing Systems GmbH, beschrieben. Beide Dokumente sind hiermit durch Bezugnahme in den Offenbarungsgehalt der vorliegenden Anmeldung einbezogen.

Die Daten hoher Packungsdichte werden in einem flüchtigen oder dauerhaften Speicher, insbesondere im Computer, in einer Datei Da gespeichert. Die bei den Filterungsschritten ermittelte Liste der Rechtecke wird nach dem Datenformat SPDS mit hoher Datendichte verpackt und ebenfalls in der Datei Da gespeichert. Mit Hilfe der erwähnten Filterfunktion kann die Erzeugung der komprimierten Daten beschleunigt werden, d.h. es wird eine verkürzte Zeit zum Aufbereiten der Daten benötigt. Der Drucker greift auf die Datei Da zu, wobei aufgrund der hohen Packungsdichte und des hohen Informationsgehaltes das an den Drucker zu übertragende Datenvolumen klein ist. Bei einer vorgegebenen Datenübertragungsgeschwindigkeit kann also eine ausreichend große Datenmenge übertragen werden. Dies bedeutet, daß der Drucker als Hochleistungsdrucker mit einer hohen Druckleistung auch bei Druckseiten mit vielen gleichartigen grauen Bildanteilen in ausreichendem Maße mit Bildrasterdaten versorgt wird und bei hoher Druckgeschwindigkeit unterbrechungsfrei drukken kann. Der Drucker enthält ebenfalls einen Computer oder eine Steuerung mit einem Dekompressionsprogramm, mit dessen Hilfe die Daten der Datei Da in weiterverarbeitbare Druckdaten umgewandelt werden. Vorzugsweise enthält das Dekompressionsprogramm eine ODER-Funktion, durch die die Bildrasterdaten der Rechtecke und die Bildrasterdaten, die in herkömmlicherweise übertragen werden, zu gemeinsamen Bildrasterdaten zusammengesetzt werden.

Figur 13 zeigt den Aufbau eines herkömmlichen Systems. Die Bildrasterdaten des RIP-Bausteins werden ausschließlich nach einem Standard-Komprimierungsverfahren, z.B. dem FAX G4 Komprimierungsverfahren, komprimiert und dann mit Hilfe des IOCA- und/oder SPDS-Datenformats als Daten hoher Pakkungsdichte in einer Datei Da gespeichert. Da für jedes gleichartige graue Bildelement viele Daten anfallen, ist der Speicherbedarf für die Datei Da sehr hoch. Ebenso sind die Komprimierungsalgorithmen zum Komprimieren der entsprechenden Bildrasterdaten für gleichartige graue Bildelemente umfangreich und zeitaufwendig. Beim Drucken greift der Drucker auf die Daten in der Datei Da zu. Da eine erhebliche Datenmenge zu verarbeiten ist, die Datenübertragungsgeschwindigkeit von der Datei Da zum Drucker jedoch begrenzt ist, kann es vorkommen, daß der Drucker schneller drucken kann, als Daten über die Datei Da bereitgestellt werden. In diesem Falle kommt es zu einem kurzzeitigen Anhalten des Druckvorgangs. Ein solcher Start-Stopp-Betrieb ist jedoch für einen Hochleistungsdrucker sehr störend; seine Leistungsfähigkeit wird nur verringert genutzt. Ein solcher Hochleistungsdrucker hat typischerweise eine Druckleistung größer als 400 Seiten DIN A4 je Minute bei einer Auflösung von 600 dpi (dots per inch).

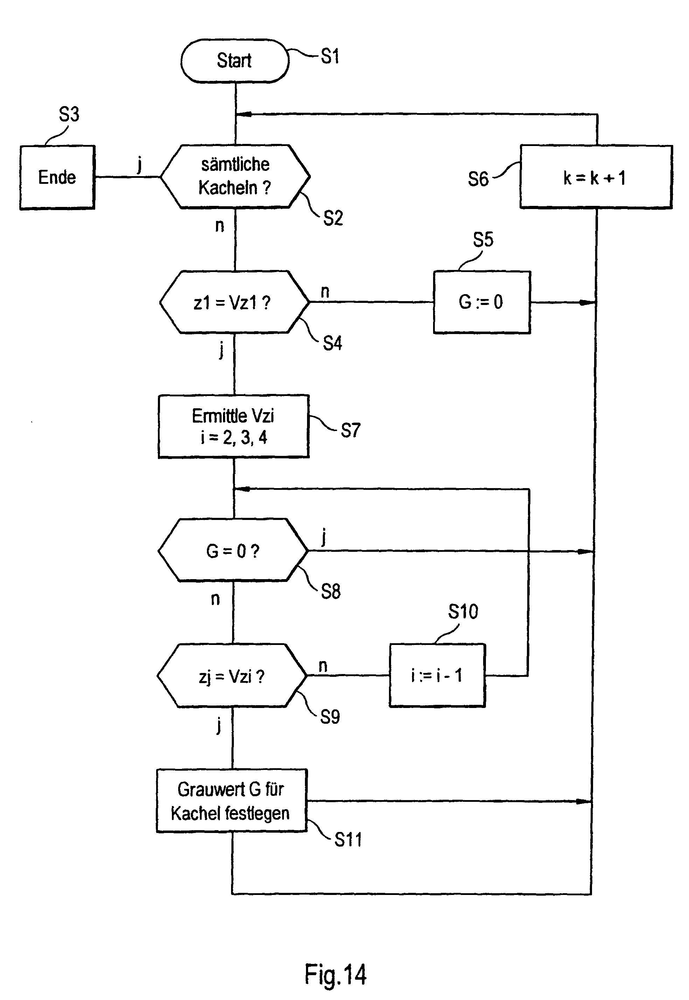

Figur 14 zeigt in einem Flußdiagramm schematisch Verfahrensschritte, wie sie bereits in den Figuren 3 bis 6 erläutert wurden. Diese Verfahrensschritte dienen dazu, für eine Kachel K einen Grauwert G=0 oder einen höheren Grauwert G festzulegen. Wie erwähnt, wird ein Grauwert G=0 zugewiesen, wenn eine Zeile z einer Kachel K kein graues Bildelement, d.h. keine Ditherzelle enthält. In der Figur 14 sind nur wesentliche Schritte dargestellt, die dazu dienen, das Grundsätzliche des Verfahrens zu erläutern. Erforderliche Zwischenschritte, beispielsweise das Festlegen von Anfangszuständen für Laufvariablen, das Verändern von Laufvariablen etc. ist dem Fachmann auf diesem Gebiet geläufig.

Nach dem Start (Schritt S1) wird im Schritt S2 überprüft, ob sämtliche Kacheln K einer Seite bereits abgearbeitet sind. Wenn dies zutrifft, so wird im Schritt S3 die gesamte Schrittfolge für eine Seite beendet. Sind noch nicht sämtliche Kacheln K abgearbeitet, so wird im nachfolgenden Schritt S4 geprüft, ob die betreffende Kachel K in ihrer ersten Zeile z1 mit der Vergleichszeile Vz1 übereinstimmt, welche wie erwähnt den niedrigsten Grauwert G=1 hat. Wenn keine Übereinstimmung festgestellt wird, so wird im Schritt S5 dieser Kachel K der extreme Grauwert G=0 zugewiesen und zum Schritt S6 verzweigt. In diesem Schritt S6 wird die Kachellaufvariable k um 1 erhöht und zum Schritt S2 verzweigt.

Wenn im Schritt S4 festgestellt wird, daß die erste Zeile z1 zumindest mit der Vergleichszeile Vz1 übereinstimmt, so wird im nachfolgenden Schritt S7 festgestellt, ob es Vergleichszeilen Vz2, Vz3, Vz4 mit höherem Grauwert G gibt, die mit der ersten Zeile z1 übereinstimmen. Die Vergleichszeile Vzi (i ist eine Laufvariable) mit höchstem Grauwert G wird dann weiter verwendet. Der nachfolgende Schritt S8 wird später erläutert. Im darauffolgenden Schritt S9 wird für jede Zeile zj (worin j eine Laufvariable für die Zeilennummer ist) derselben Kachel K bestimmt, ob sie mit der im Schritt S7 festgestellten Vergleichszeile Vzi übereinstimmt. Wenn dies nicht zutrifft, so wird im Schritt S10 die Laufvariable i um 1 erniedrigt, d.h. es wird eine Vergleichszeile Vzi mit nächstniedrigem Grauwert G für die weitere Analyse verwendet. Im Schritt S8 wird nun festgestellt, ob der extreme Grauwert G=0 erreicht ist. Wenn dies zutrifft, so wird zum Schritt S6 verzweigt und die nächste Kachel K analysiert. Der Grauwert G=0 bedeutet, daß innerhalb der Kachel K ein weißes Bildelement auftritt, dem kein Grauwert zugeordnet werden kann.

Im Schritt S11 wird nun der Grauwert G für die betreffende Kachel K festgelegt. Dieser Grauwert G besagt, daß in sämtlichen Zeilen zj dieser Kachel Ditherzellen zumindest dieses Grauwerts G vorhanden sind. Ein höherer Grauwert G ist möglich.

### Bezugszeichenliste

- 10: Computer
- 11: Diskette

- A, B: Muster-Ditherzellen

- K, K1, K2, Ki, Kn, Ka: Kacheln

- GN: Gitternetz
- S: Seite

- Vz1, Vz2, Vz3, Vz4,: Vergleichszeilen

- G: Grauwert
- z1 bis z5: Zeile einer Kachel

- Ra, Rb, Rc, Rd, Re, Rf, R1, R2: Rechtecke mit Kacheln

- D: Ditherzelle
- BD: Bildrasterdaten
- L: Liste
- Da: Datei
- S1 bis S11: Verfahrensschritte

## Patentansprüche

1. Verfahren zum Komprimieren und Übertragen von Bildrasterdaten,
bei dem aus Sprachelementen einer Graphiksprache seitenweise ein Datenstrom von Bildrasterdaten erzeugt wird, der graue Bildbereiche in Form von Ditherzellen enthält, deren Grauwerte (G) durch Muster-Ditherzellen (A, B) festgelegt sind,
die Bildrasterdaten einer jeden Seite (S), in Kacheln (K) eines zweidimensionalen Gitternetzes (GN) eingeteilt werden, wobei jede Kachel (K) eine Vielzahl von Bildrasterdaten umfaßt,
**dadurch gekennzeichnet, daß** für jede Kachel (K), die nur Ditherzellen enthält, die zugehörige Muster-Ditherzelle und deren Grauwert (G) bestimmt und diese Kachel (K) markiert wird,
und daß Kenndaten der markierten Kacheln (K) zur weiteren Verarbeitung der Bildrasterdaten übertragen werden, wobei diese Kenndaten Informationen über die Position der jeweiligen Kachel (K) und den jeweiligen Grauwert (G) enthalten.

2. Verfahren nach Anspruch 1, **dadurch gekennzeichnet, daß** die bitherzellen rechteckförmig oder quadratisch angeordnete Bildpunkte enthalten, und daß die Muster-Ditherzelle (A) mit höherem Grauwert (G) mindestens eingefärbte Bildpunkte an gleichen Positionen enthält wie die Muster-Ditherzelle (B) mit nächst niedrigem Grauwert (G).

3. Verfahren nach Anspruch 1 oder 2, **dadurch gekennzeichnet, daß** jede Kachel (K) daraufhin überprüft wird, ob sie Ditherzellen nach Art der Muster-Ditherzelle mit niedrigstem Grauwert (G=1) enthält .

4. Verfahren nach Anspruch 3, **dadurch gekennzeichnet, daß** das Überprüfen der Kacheln (K) Kachelzeile für Kachelzeile erfolgt, wobei je Kachel (K) zunächst die erste Zeile (z1) untersucht wird, und daß bei fehlender Übereinstimmung die betreffende Kachel (K) nicht weiter untersucht wird.

5. Verfahren nach Anspruch 3 oder 4, **dadurch gekennzeichnet, daß** für die Kachel (Ka), die Ditherzellen nach Art der Muster-Ditherzelle mit niedrigstem Grauwert (G=1) enthält, die Muster-Ditherzelle mit höchstem Grauwert (G=3) ermittelt wird, die in sämtlichen Ditherzellen der Kachel (Ka) enthalten ist, und daß der Grauwert (G=3) dieser Muster-Ditherzelle dieser Kachel (Ka) zugeordnet wird.

6. Verfahren nach einem der vorhergehenden Ansprüche, **dadurch gekennzeichnet, daß** die Kacheln (K) eine einheitliche Zeilenlänge haben, vorzugsweise entsprechend der Bitlänge des Registers eines Hardwarebausteins, mit dem das Verfahren durchgeführt wird.

7. Verfahren nach Anspruch 6, **dadurch gekennzeichnet, daß** die Zeilenlänge 8, 16, 32, 64 oder 128 Bit oder eine additive Kombination davon beträgt.

8. Verfahren nach Anspruch 7, **dadurch gekennzeichnet, daß** zum Feststellen, ob eine Kachel Ditherzellen zumindest mit niedrigstem Gräuwert (G) entsprechend einer Muster-Ditherzelle enthält, eine Vergleichszeile (Vz1, Vz2, Vz3, Vz4) verwendet wird, die nur diese Muster-Ditherzellen enthält und deren Länge mindestens der Zeilenlänge einer Kachel entspricht, und daß der Vergleich Kachelzeile für Kachelzeile durchgeführt wird.

9. Verfahren nach Anspruch 8, **dadurch gekennzeichnet, daß** die Länge der Vergleichszeile (Vz1 Vz2, Vz3, Vz4) das kleinste gemeinsame Vielfache von Zeilenlänge der Kachel und Zeilenlänge der Ditherzelle beträgt, die vorzugsweise eine 8x8 oder 10x10 Bildpunktmatrix hat.

10. Verfahren nach Anspruch 7, 8 oder 9, **dadurch gekennzeichnnet, daß** für jeden Grauwert (G) eine Vergleichszeile (Vz1, Vz2, Vz3, Vz4) mit zugehörigen Muster-Ditherzellen verwendet wird.

11. Verfahren nach einem der vorhergehenden Ansprüche, **dadurch gekennzeichnet, daß** benachbarte Kacheln mit vorgegebenem Grauwert entsprechend einer Muster-Ditherzelle zu einem Vieleck zusammengefaßt werden,
und daß die Kenndaten dieses Vielecks, vorzugsweise komprimiert, zur weiteren Verarbeitung der Bildrasterdaten übertragen werden.

12. Verfahren nach Anspruch 11, **dadurch gekennzeichnet, daß** das Vieleck ein Quadrat oder ein Rechteck (Ra, Rb, Rc, Rd, Re) ist.

13. Verfahren nach Anspruch 12, **dadurch gekennzeichnet, daß** die zu einem Rechteck (Rb) zusammengefaßten Kacheln einen gemeinsamen minimalen Grauwert (G=1) haben, und daß die Kenndaten dieses Rechtecks (Rb) übertragen werden.

14. Verfahren nach Anspruch 12 oder 13, **dadurch gekennzeichnet, daß** das Rechteck (Rf) ein Subrechteck (Rd) enthält, dessen Kacheln einen minimalen Grauwert (G) haben der höher ist als der Grauwert (G) der Kacheln des Rechtecks (Rf).

15. Verfahren nach einem der vorhergehenden Ansprüche 12 bis 14, **dadurch gekennzeichnet, daß** eine Liste (L) von Rechtecken erstellt wird, und daß die Kenndaten dieser Liste, vorzugsweise in komprimierter Form, übertragen werden.

16. Verfahren nach Anspruch 15, **dadurch gekennzeichnet, daß** die Liste (L) so geordnet wird, daß Rechtecke mit absteigender Anzahl von Kacheln einen absteigenden Rang in der Liste einnehmen, und daß von dieser Liste nur diejenigen Rechtecke zur weiteren Verarbeitung Übertragen werden, deren Anzahl von Kacheln einen vorbestimmten Wert übersteigt.

17. Verfahren nach Anspruch 14 oder 15, **dadurch gekennzeichnet, daß** die Anzahl der Rechtecke der Liste auf einen vorgegebenen Wert beschränkt ist.

18. Verfahren nach einem der Ansprüche 12 bis 17, **dadurch gekennzeichnet, daß** Ditherzellen einer Zeile oder einer Reihe, die an ein Rechteck (Rc, Rd, Re) angrenzen und gleichen. minimalen Grauwert wie die Ditherzellen des Rechtecks (Rc, Rd, Re) haben, in das erweiterte Rechteck (Rc, Rd, Re) einbezogen werden, wobei die Grenzen der Rechtecke (Rc, Rd, Re) entsprechend erweitert werden.

19. Verfahren nach einem der vorhergehenden Ansprüche 12 bis 18, **dadurch gekennzeichnet, daß** für jedes Rechteck in bezug auf eine Seite die Position der linken oberen Ecke, seine Höhe, seine Breite und der Grauwert (G) ermittelt und diese Kenndaten vorzugsweise in komprimierter Form übertragen werden.

20. Verfahren nach einem der vorhergehenden Ansprüche, **dadurch gekennzeichnet, daß** die Rasterbilddaten der markierten Kacheln oder der markierten Rechtecke (Ra) aus dem Datenstrom durch Subtraktion entfernt werden,
und daß der verbleibende Datenstrom nach einem standardisierten Komprimierungsverfahren komprimiert und übertragen wird.

21. Verfahren nach dem vorhergehenden Anspruch 20, **dadurch gekennzeichnet, daß** als standardisiertes Komprimierungsverfahren das FAX G4 Komprimierungsverfahren verwendet wird.

22. Verfahren nach einem der vorhergehenden Ansprüche, **dadurch gekennzeichnet, daß** die Daten der markierten Kacheln oder der Rechtecke (R1, R2) nach des SPDS-Datenformat übertragen werden.

23. Verfahren nach einem der Ansprüche 20 bis 22, **dadurch gekennzeichnet, daß** die übertragenen Bildrasterdaten unter Verwendung einer ODER-Funktion wieder zusammengesetzt werden.

24. Verfahren nach einem der vorhergehenden Ansprüche, **dadurch gekennzeichnet, daß** zum Erzeugen des Datenstroms von Bildrasterdaten aus Sprachelementen der Graphiksprache ein RIP-Baustein verwendet wird, vorzugsweise ein POSTSCRIPT-Konverter-Baustein (PS).

25. Verfahren nach einem der vorhergehenden Ansprüche, **dadurch gekennzeichnet, daß** es zur Übertragung von Druckrasterdaten an Druckern, vorzugsweise an Hochleistungsdruckern, verwendet wird.

26. Verfahren Anspruch 25, **dadurch gekennzeichnet, daß** der Hochleistungsdrucker eine Druckleistung größer gleich 400 Seiten DIN A4 je Minute bei 600 dpi hat.

27. System zum Komprimieren und Übertragen von Bildrasterdaten,
mit einem RIP-Baustein (RIP), der aus Sprachelementen einer Graphiksprache (PS) seitenweise einen Datenstrom von Bildrasterdaten erzeugt, der graue Bildbereiche in Form von Ditherzellen enthält, deren Grauwerte (G) durch Muster-Ditherzellen (A,B) festgelegt sind,
wobei die Bildrasterdaten einer jeden Seite (S) in Kacheln (K) eines zweidimensionalen Gitternetzes (GN) eingeteilt werden, wobei jede Kachel (K) eine Vielzahl von Bildrasterdaten umfaßt,
**dadurch gekennzeichnet, daß** für jede Kachel (K), die nur Ditherzellen enthält, die zugehörige Muster-Ditherzelle und deren Grauwert (G) bestimmt und diese Kachel (K) markiert wird,
und daß Kenndaten der markierten Kacheln (K) zur weiteren Verarbeitung der Bildrasterdaten übertragen werden, wobei diese Kenndaten Informationen über die Position der jeweiligen Kachel (K) und den jeweiligen Grauwert (G) enthalten.

28. System nach Anspruch 27, **dadurch gekennzeichnet, daß** die Ditherzellen rechteckförmig oder quadratisch angeordnete Bildpunkte enthalten, und daß die Muster-Ditherzelle (A) mit höherem Grauwert (G) mindestens eingefärbte Bildpunkte an gleichen Positionen enthält wie die Muster-Ditherzelle (B) mit nächst niedrigem Grauwert (G).

29. System nach einem der vorhergehenden Ansprüche 27 oder 28, **dadurch gekennzeichnet, daß** benachbarte Kacheln mit vorgegebenem Grauwert entsprechend einer Muster-Ditherzelle zu einem Vieleck zusammengefaßt werden,
und daß Kenndaten dieses Vielecks, vorzugsweise komprimiert, zur weiteren Verarbeitung der Bildrasterdaten übertragen werden.

30. System nach Anspruch 29, **dadurch gekennzeichnet, daß** das Vieleck ein Quadrat oder ein Rechteck (Ra, Rb, Rc, Rd, Re) ist.

31. Verfahren zum Komprimieren und Übertragen von Bildrasterdaten,
bei dem aus Sprachelementen einer Graphiksprache seitenweise ein Datenstrom von Bildrasterdaten erzeugt wird, der graue Bildelemente in Form von Ditherzellen enthält, deren Grauwerte (G) durch Muster-Ditherzellen (A,B) festgelegt sind,
**dadurch gekennzeichnet, daß** mindestens ein Bereich (R1, R2) ermittelt wird, der nur Ditherzellen enthält, wobei die zugehörige Muster-Ditherzelle und deren Grauwert (G) bestimmt und dieser Bereich (R1, R2) markiert wird,
und daß Kenndaten der markierten Kacheln (K) zur weiteren Verarbeitung der Bildrasterdaten übertragen werden, wobei diese Kenndaten Informationen über die Position der jeweiligen Kachel (K) und den jeweiligen Grauwert (G) enthalten.

32. Verfahren nach Anspruch 31, **dadurch gekennzeichnet, daß** die Ditherzellen rechteckförmig oder quadratisch angeordnete Bildpunkte enthalten, und daß die Muster-Ditherzelle (A) mit höherem Grauwert (G) mindestens eingefärbte Bildpunkte an gleichen Positionen enthält wie die Muster-Ditherzelle (B) mit nächst niedrigem Grauwert (G).

33. Verfahren nach Anspruch 32, **dadurch gekennzeichnet, daß** die Ditherzellen eines rechteckförmigen Bereichs (Rb) einen gemeinsamen minimalen Grauwert (G=1) haben.

34. Verfahren nach Anspruch 33, **dadurch gekennzeichnet, daß** eine Liste (L) vom Rechtecken erstellt wird, und daß die Kenndaten dieser Liste, vorzugsweise in komprimierter Form, übertragen werden.

35. Computerprogrammprodukt umfassend ein für einen Computer lesbares Medium, durch das Befehle in codierter Form bereitgestellt werden, die nach dem Laden des Computerprogramms den Computer veranlassen, die Schritte nach einem der Ansprüche 1 bis 26 oder 31 bis 34 auszuführen.

36. Computerprogrammelement umfassend Befehle in codierter Form, die den Computer veranlassen, die Schritte nach einem der Ansprüche 1 bis 26 oder 31 bis 34 auszuführen.

37. Computerprogrammelement nach Anspruch 36, **dadurch gekennzeichnet, daß** es auf einem für den Computer lesbaren Medium vorhanden ist.

38. Computerlesbares Medium, das ein Computerprogramm enthält, wobei das Computerprogramm einen Computer veranlaßt, Schritte nach einem der Ansprüche 1 bis 26 oder 31 bis 34 auszführen.

## Claims

1. Method for compressing and transmitting image raster data,
wherein a data stream of image raster data is generated from language elements of a graphics language, said data stream containing grey image areas in the form of dither cells whose grey scale values (G) are determined by model dither cells (A, B),
the image raster data of each and every page (S) are divided into tiles (K) of a two-dimensional grid network (GN), each tile (K) comprising a plurality of image raster data,
**characterized in that** the appertaining model dither cell and the grey scale value (G) thereof is identified for each tile (K) that contains only dither cells, and this tile (K) is marked,
and **in that** characteristic data of the marked tiles (K) are transmitted for further processing of the image raster data, these characteristic data containing information about the position of the respective tile (K) and the respective grey scale value (G).

2. Method according to claim 1, **characterized in that** the dither cells contain rectangularly or quadratically arranged picture elements, and **in that** the model dither cell (A) with higher grey scale value (G) at least contains inked picture elements at the same positions as the model dither cell (B) with the next-lower grey scale value (G).

3. Method according to claim 1 or 2, **characterized in that** each tile (K) is checked to see whether it contains dither cells of the type of the model dither cell with the lowest grey scale value (G=1).

4. Method according to claim 3, **characterized in that** the check of the tiles (K) takes place tile row by tile row, the first row (z1) being investigated first per tile (K), and **in that**, in the case of lack of correspondence, the appertaining tile (K) is investigated no further.

5. Method according to claim 3 or 4, **characterized in that** the model dither cell with the highest grey scale value (G=3) that is contained in all dither cells of a tile (Ka) is determined for the tile (Ka) that contains dither cells of the type of the model dither cell with the lowest grey scale value (G=1), and **in that** the grey scale value (G=3) of this model dither cell is assigned to this tile (Ka).

6. Method according to one of the preceding claims, **characterized in that** the tiles (K) have a uniform row length, preferably corresponding to the bit length of the register of a hardware module with which the method is implemented.

7. Method according to claim 6, **characterized in that** the row length amounts to 8, 16, 32, 64 or 128 bits or an additive combination thereof.

8. Method according to claim 7, **characterized in that**, for determining whether a tile contains dither cells at least with the lowest grey scale value (G) corresponding to a model dither cell, a comparison row (Vz1, Vz2, Vz3, Vz4) is employed that contains only these model dither cells and whose length at least corresponds to the row length of a tile, and **in that** the comparison is implemented tile row by tile row.

9. Method according to claim 8, **characterized in that** the length of the comparison row (Vz1, Vz2, Vz3, Vz4) amounts to the smallest common multiple of row length of the tile and row length of the dither cell, which preferably has an 8x8 or 10x10 picture element matrix.

10. Method according to claim 7, 8 or 9, **characterized in that** a comparison row (Vz1, Vz2, Vz3, Vz4) with appertaining model dither cells is employed for each grey scale value (G).

11. Method according to one of the preceding claims, **characterized in that** neighbouring tiles having a prescribed grey scale value corresponding to a model dither cell are combined to form a polygon,
and **in that** the characteristic data of this polygon are transmitted, preferably compressed, for the further processing of the image raster data.

12. Method according to claim 11, **characterized in that** the polygon is a square or a rectangle (Ra, Rb, Rc, Rd, Re).

13. Method according to claim 12, **characterized in that** the tiles combined to form a rectangle (Rb) have a common minimal grey scale value (G=1), and **in that** the characteristic data of this rectangle (Rb) are transmitted.

14. Method according to claim 12 or 13, **characterized in that** the rectangle (Rf) contains a sub-rectangle (Rd) whose tiles have a minimum grey scale value (G) that is higher than the grey scale value (G) of the tiles of the rectangle (Rf).

15. Method according to one of the preceding claims 12 to 14, **characterized in that** a list (L) of rectangles is produced, and **in that** characteristic data of this list are transmitted, preferably in compressed form.

16. Method according to claim 15, **characterized in that** the list (L) is organized such that rectangles with a descending number of tiles assume a descending rank in the list, and **in that** only those rectangles from this list whose plurality of tiles exceeds a predetermined value are transmitted for further processing.

17. Method according to claim 14 or 15, **characterized in that** the number of rectangles of the list is limited to a predetermined value.

18. Method according to one of the claims 12 to 17, **characterized in that** the dither cells of a row or of a sequence that adjoin a rectangle (Rc, Rd, Re) and have the same minimum grey scale value as the dither cells of the rectangle (Rc, Rd, Re) are incorporated into the expanded rectangle (Rc, Rd, Re), the boundaries of the rectangles (Rc, Rd, Re) being correspondingly expanded.

19. Method according to one of the preceding claims 12 to 18, **characterized in that** the position of the upper left corner, the height, the width and the grey scale value (G) are determined for each rectangle with reference to a page, and these characteristic data are transmitted, preferably in compressed form.

20. Method according to one of the preceding claims, **characterized in that** the raster image data of the marked tiles or of the marked rectangles (Ra) are removed from the data stream by subtraction,
and **in that** the remaining data stream is compressed according to a standardized compression method and transmitted.

21. Method according to the preceding claim 20, **characterized in that** the FAX G4 compression method is employed as standardized compression method.

22. Method according to one of the preceding claims, **characterized in that** the data of the marked tiles or of the rectangles (R1, R2) are transmitted according to the SPDS data format.

23. Method according to one of the claims 20 to 22, **characterized in that** the transmitted image raster data are re-compiled upon employment of an OR function.

24. Method according to one of the preceding claims, **characterized in that** an RIP module, preferably a POSTSCRIPT converter module (PS) is employed for generating the data stream of image raster data from language elements of the graphics language.

25. Method according to one of the preceding claims, **characterized in that** it is employed for the transmission of print raster data to printers, preferably to high-performance printers.

26. Method according to claim 25, **characterized in that** the high-performance printer has a printing output of greater than or equal to 400 pages DIN A4 per minute at 600 dpi.

27. System for compressing and transmitting image raster data,
comprising an RIP module (RIP) that generates a data stream of image raster data page-by-page from language elements of a graphics language, said data stream containing grey image areas in the form of dither cells whose grey scale values (G) are determined by model dither cells (A, B),
the image raster data of each and every page (S) being divided into tiles (K) of a two-dimensional grid network (GN), each tile (K) comprising a plurality of image raster data,
**characterized in that** the appertaining model dither cell and the grey scale value (G) thereof are identified for each tile (K) that contains only dither cells and this tile (K) is marked,
and **in that** characteristic data of the marked tiles (K) are transmitted for further processing of the image raster data, these characteristic data containing information about the position of the respective tile (K) and the respective grey scale value (G).

28. System according to claim 27, **characterized in that** the dither cells contain rectangularly or quadratically arranged picture elements, and **in that** the model dither cell (A) with higher grey scale value (G) at least contains inked picture elements at the same positions as the model dither cell (B) with the next-lower grey scale value (G).

29. System according to one of the preceding claims 27 or 28, **characterized in that** neighbouring tiles with predetermined grey scale value corresponding to a model dither cell are combined to form a polygon,
and **in that** characteristic data of this polygon are transmitted, preferably compressed, for further processing of the image raster data.

30. System according to claim 29, **characterized in that** the polygon is a square or a rectangle (Ra, Rb, Rc, Rd, Re).

31. Method for compressing and transmitting image raster data,
wherein a data stream of image raster data is generated page-by-page from language elements of a graphics language, said data stream containing grey picture elements in the form of dither cells whose grey scale values (G) are defined by model dither cells (A, B),
**characterized in that** at least one area (R1, R2) is determined that contains only dither cells, the appertaining model dither cell and the grey scale value (G) thereof being identified and this area (R1, R2) being marked,
and **in that** characteristic data of the marked tiles (K) are transmitted for further processing of the image raster data, these characteristic data containing information about the position of the respective tile (K) and the respective grey scale value (G).

32. Method according to claim 31, **characterized in that** the dither cells contain rectangularly or quadratically arranged picture elements, and **in that** the model dither cell (A) with higher grey scale value (G) at least contains inked picture elements at the same positions as the model dither cell (B) with the next-lower grey scale value (G).

33. Method according to claim 32, **characterized in that** the dither cells of a rectangular area (Rb) have a common minimum grey scale value (G=1).

34. Method according to claim 33, **characterized in that** a list (L) of rectangles is produced, and **in that** the characteristic data of this list are transmitted, preferably in compressed form.

35. Computer program product comprising a computer-readable medium with which commands are offered in encoded form, these, after the loading of the computer program, causing the computer to implement the steps according to one of the claims 1 to 26 or 31 to 34.

36. Computer program element comprising commands in encoded form that cause the computer to implement the steps according to one of the claims 1 to 26 or 31 to 34.

37. Computer program element according to claim 36, **characterized in that** it is present on a computer-readable medium.

38. Computer-readable medium that contains a computer program, the computer program causing a computer to implement the steps according to one of the claims 1 to 26 or 31 to 34.

## Revendications

1. Procédé de compression et de transfert de données de trame d'image, dans lequel
un flux de données de trame d'image est généré page par page à partir d'éléments d'un protocole graphique, lequel flux de données contient des zones d'image grises se présentant sous la forme de cellules Dither dont les valeurs de gris (G) sont déterminées par des cellules Dither de référence (A, B),
les données de trame d'image de chaque page (S) sont subdivisées en carreaux (K) d'un réseau quadrillé bidimensionnel (GN), chaque carreau (K) comportant un grand nombre de données de trame d'image,
**caractérisé en ce que**
pour chaque carreau (K) qui ne contient que des cellules Dither, on détermine les cellules Dither, de référence associées et leur valeur de gris (G), et on marque ces carreaux (K), et
des données caractéristiques des carreaux marqués (K) sont transférées en vue du traitement ultérieur des données de trame d'image, ces données caractéristiques contenant des informations sur la position des carreaux correspondants (K) et la valeur de gris correspondante (G).

2. Procédé selon la revendication 1, **caractérisé en ce que** les cellules Dither contiennent des points d'image agencés en rectangle ou en carré, et **en ce que** les cellules Dither de référence (A) ayant une valeur de gris (G) plus élevée contiennent au moins des points d'image colorés aux mêmes positions que les cellules Dither de référence (B) ayant une faible valeur de gris (G) adjacente.

3. Procédé selon la revendication 1 ou 2, **caractérisé en ce que** l'on vérifie ensuite si chaque carreau (K) contient des cellules Dither semblables à la cellule Dither de référence ayant la valeur de gris la plus faible (G = 1).

4. Procédé selon la revendication 3, **caractérisé en ce que** la vérification des carreaux (K) est effectuée ligne de carreaux par ligne de carreaux, chaque carreau (K) de la première ligne (z1) étant tout d'abord examiné, et **en ce que** le carreau concerné (K) n'est plus examiné en cas de correspondance erronée.

5. Procédé selon la revendication 3 ou 4, **caractérisé en ce que**, pour le carreau (Ka) qui contient des cellules Dither semblables à la cellule Dither de référence ayant une valeur de gris la plus faible (G = 1), on détermine la cellule Dither de référence ayant la valeur de gris la plus élevée (G = 3) qui est contenue dans l'ensemble des cellules Dither du carreau (Ka), et **en ce que** la valeur de gris (G = 3) est associée à cette cellule Dither de référence de ce carreau (Ka).

6. Procédé selon l'une des revendications précédentes, **caractérisé en ce que** les carreaux (K) ont une longueur de ligne uniforme, correspondant avantageusement à la longueur en bits du registre d'un module matériel au moyen duquel le procédé est mis en oeuvre.

7. Procédé selon la revendication 6, **caractérisé en ce que** la longueur de ligne est de 8, 16, 32, 64 ou 128 bits ou une combinaison additive de ceux-ci.

8. Procédé selon la revendication 7, **caractérisé en ce que** pour déterminer si un carreau contient des cellules Dither ayant au moins une valeur de gris (G) la plus faible correspondant à une cellule Dither de référence, on utilise une ligne de comparaison (Vz1, Vz2, Vz3, Vz4) qui ne contient que ces cellules Dither de référence et dont la longueur correspond au moins à la longueur de ligne d'un carreau, et **en ce que** la comparaison est effectuée ligne de carreaux par ligne de carreaux.

9. Procédé selon la revendication 8, **caractérisé en ce que** la longueur de la ligne de comparaison (Vz1, Vz2, Vz3, Vz4) est égale au plus petit commun multiple de la longueur de ligne du carreau et de la longueur de ligne de la cellule Dither qui a avantageusement une matrice de points d'image 8 x 8 ou 10 x 10.

10. Procédé selon la revendication 7, 8 ou 9, **caractérisé en ce qu'**une ligne de comparaison (Vz1, Vz2, Vz3, Vz4) comportant des cellules Dither de référence associées est utilisée pour chaque valeur de gris (G).

11. Procédé selon l'une des revendications précédentes, **caractérisé en ce que** des carreaux adjacents de valeur de gris prédéterminée correspondant à une cellule Dither de référence sont assemblés pour former un polygone, et **en ce que** les données caractéristiques de ce polygone, avantageusement comprimées, sont transférées en vue du traitement ultérieur des données de trame d'image.

12. Procédé selon la revendication 11, **caractérisé en ce que** le polygone est un carré ou un rectangle (Ra, Rb, Rc, Rd, Re).

13. Procédé selon la revendication 12, **caractérisé en ce que** les carreaux assemblés en un rectangle (Rb) ont une valeur de gris commune minimale (G = 1), et **en ce que** les données caractéristiques de ce rectangle (Rb) sont transférées.

14. Procédé selon la revendication 12 ou 13, **caractérisé en ce que** le rectangle (Rf) contient un sous-rectangle (Rd) dont les carreaux ont une valeur de gris minimale (G) qui est supérieure à la valeur de gris (G) des carreaux du rectangle (Rf).

15. Procédé selon l'une des revendications précédentes 12 à 14, **caractérisé en ce que** l'on établit une liste (L) de rectangles, et **en ce que** les données caractéristiques de cette liste, avantageusement sous forme comprimée, sont transférées.

16. Procédé selon la revendication 15, **caractérisé en ce que** la liste (L) est agencée de telle sorte que des rectangles comportant un nombre décroissant de carreaux occupe un rang descendant dans la liste, et **en ce que** les rectangles de cette liste, dont le nombre de carreaux dépasse une valeur prédéterminée, sont transférés en vue du traitement ultérieur.

17. Procédé selon la revendication 14 ou 15, **caractérisé en ce que** le nombre des rectangles de la liste est limité à une valeur prédéterminée.

18. Procédé selon l'une des revendications 12 à 17, **caractérisé en ce que** les cellules Dither d'une ligne ou d'une rangée, qui sont adjacentes à un rectangle (Rc, Rd, Re) et qui ont une valeur de gris minimale égale à celle des cellules Dither du rectangle (Rc, Rd, Re), sont incluses dans le rectangle élargi (Rc, Rd, Re), les limites des rectangles (Rc, Rd, Re) étant élargies de façon correspondante.

19. Procédé selon l'une des revendications précédentes 12 à 18, **caractérisé en ce que** l'on détermine, pour chaque rectangle, par rapport à un côté, la position du coin supérieur gauche, sa hauteur, sa largeur et la valeur de gris (G), et ces données caractéristiques sont transférées, avantageusement sous forme comprimée.

20. Procédé selon l'une des revendications précédentes, **caractérisé en ce que** les données d'image de trame des carreaux marqués ou des rectangles marqués (Ra) sont éliminées par soustraction du flux de données, et **en ce que** le flux de données restant est comprimé conformément à un procédé de compression normalisé, et est transféré.

21. Procédé selon la revendication précédente 20, **caractérisé en ce que** l'on utilise comme procédé de compression normalisé le procédé de compression FAX G4.

22. Procédé selon l'une des revendications précédentes, **caractérisé en ce que** les données des carreaux marqués ou des rectangles (R1, R2) sont transférées au format de données SPDS.

23. Procédé selon l'une des revendications 20 à 22, **caractérisé en ce que** les données de trame d'image transférées sont de nouveau assemblées en utilisant une fonction OU.

24. Procédé selon l'une des revendications précédentes, **caractérisé en ce qu'**il est utilisé un module RIP, avantageusement à module de conversion PostScript (PS), pour générer le flux de données de trame d'image à partir d'éléments du protocole graphique.

25. Procédé selon l'une des revendications précédentes, **caractérisé en ce qu'**il est utilisé pour transférer des données de trame d'impression à des appareils d'impression, et avantageusement à des appareils d'impression à grande vitesse.

26. Procédé selon la revendication 25, **caractérisé en ce que** l'appareil d'impression à grande vitesse a une capacité d'impression supérieure ou égale à 400 pages DIN A4 par minute à 600 dpi.

27. Système de compression et de transfert de données de trame d'image, comportant un module RIP (RIP) qui génère à partir d'éléments d'un protocole graphique (PS) page par page un flux de données de trame d'image qui contient des zones d'image grises sous forme de cellules Dither dont les valeurs de gris (G) sont déterminées par des cellules Dither de référence (A, B),
les données de trame d'image de chaque page (S) sont subdivisées en carreaux (K) d'un réseau quadrillé bidimensionnel (GN), chaque carreau (K) comportant un grand nombre de données de trame d'image,
**caractérisé en ce que**, pour chaque carreau (K) qui ne contient que des cellules Dither, on détermine les cellules Dither de référence associées et leur valeur de gris (G) et on marque ces carreaux (K),
et **en ce que** des données caractéristiques des carreaux marqués (K) sont transférées en vue du traitement ultérieur des données de trame d'image, ces données caractéristiques contenant des informations sur la position des carreaux correspondants (K) et la valeur de gris correspondante (G).

28. Système selon la revendication 27, **caractérisé en ce que** les cellules Dither contiennent des points d'image agencés en rectangle ou en carré, et **en ce que** les cellules Dither de référence (A) ayant une valeur de gris (G) plus élevée contiennent au moins des points d'image colorés aux mêmes positions que les cellules Dither de référence (B) ayant une faible valeur de gris (G) adjacente.

29. Système selon l'une des revendications précédentes 27 ou 28, **caractérisé en ce que** des carreaux adjacents de valeur de gris prédéterminée correspondant à une cellule Dither de référence sont assemblés pour former un polygone, et **en ce que** les données caractéristiques de ce polygone, avantageusement comprimées, sont transférées en vue du traitement ultérieur des données de trame d'image.

30. Système selon la revendication 29, **caractérisé en ce que** le polygone est un carré ou un rectangle (Ra, Rb, Rc, Rd, Re).

31. Procédé de compression et de transfert de données de trame d'image, dans lequel
un flux de données de trame d'image est généré page par page à partir d'éléments d'un protocole graphique, lequel flux de données contient des zones d'image grises se présentant sous la forme de cellules Dither dont les valeurs de gris (G) sont déterminées par des cellules Dither de référence (A, B),
**caractérisé en ce que**
il est déterminé au moins une zone (R1, R2) qui ne contient que des cellules Dither, les cellules Dither de référence associées et leur valeur de gris (G) et étant déterminées, et cette zone (R1, R2) étant marquée, et
des données caractéristiques des carreaux marqués (K) sont transférées en vue du traitement ultérieur des données de trame d'image, ces données caractéristiques contenant des informations sur la position des carreaux correspondants (K) et la valeur de gris correspondante (G).

32. Procédé selon la revendication 31, **caractérisé en ce que** les cellules Dither contiennent des points d'image agencés en rectangle ou en carré, et **en ce que** les cellules Dither de référence (A) ayant une valeur de gris (G) plus élevée contiennent au moins des points d'image colorés aux mêmes positions que les cellules Dither de référence (B) ayant une faible valeur de gris (G) adjacente.

33. Procédé selon la revendication 32, **caractérisé** les cellules Dither d'une zone de forme rectangulaire (Rb) ont une valeur de gris commune minimale (G = 1).

34. Procédé selon la revendication 33, **caractérisé en ce que** l'on établit une liste (L) de rectangles, et **en ce que** les données caractéristiques de cette liste, avantageusement sous forme comprimée, sont transférées.

35. Produit de programme informatique comportant un support lisible par l'ordinateur et permettant d'élaborer des ordres sous forme codée qui commandent à l'ordinateur, après le chargement du programme informatique, de réaliser les étapes selon l'une des revendications 1 à 26 ou 31 à 34.

36. Elément de programme informatique comportant des ordres sous forme codée qui commandent à l'ordinateur de réaliser les étapes selon l'une des revendications 1 à 26 ou 31 à 34.

37. Elément de programme informatique selon la revendication 36, **caractérisé en ce qu'**il est agencé sur un support lisible par l'ordinateur.

38. Support lisible par un ordinateur qui contient un programme informatique, le programme informatique commandant à l'ordinateur de réaliser les étapes selon l'une des revendications 1 à 26 ou 31 à 34.
